**Europäisches Patentamt**

**European Patent Office**

**Office européen des brevets**

(11) Veröffentlichungsnummer: **0 407 826 B1**

(12) **EUROPÄISCHE PATENTSCHRIFT**

(45) Veröffentlichungstag der Patentschrift: **21.12.94**

(51) Int. Cl.[5]: **C08G 63/676**, C09D 167/07

(21) Anmeldenummer: **90112390.1**

(22) Anmeldetag: **29.06.90**

(54) **Acryloylgruppen enthaltende Polyester, ein Verfahren zu ihrer Herstellung und ihre Verwendung als Lackbindemittel.**

(30) Priorität: **12.07.89 DE 3922875**

(43) Veröffentlichungstag der Anmeldung:
**16.01.91 Patentblatt 91/03**

(45) Bekanntmachung des Hinweises auf die
Patenterteilung:
**21.12.94 Patentblatt 94/51**

(84) Benannte Vertragsstaaten:
**AT BE CH DE ES FR GB IT LI NL SE**

(56) Entgegenhaltungen:
**EP-A- 0 279 303**
**DE-A- 1 795 625**
**GB-A- 2 025 996**
**US-A- 4 163 093**

(73) Patentinhaber: **BAYER AG**

**D-51368 Leverkusen (DE)**

(72) Erfinder: **Meixner, Jürgen, Dr.**
**Josef-Brocker-Dyk 56**
**D-4150 Krefeld (DE)**
Erfinder: **Fischer, Wolfgang, Dr.**
**Eschendonk 6**
**D-4005 Meerbusch 3 (DE)**

**Beschreibung**

Die Erfindung betrifft Acryloylgruppen enthaltende Polyester, die durch Strahlenhärtung in vernetzte Produkte überführt werden können, ein Verfahren zu ihrer Herstellung und ihre Verwendung als Lackbindemittel.

Es ist bekannt, daß mindestens zwei Acryloylgruppen tragende Polyester durch Strahlenhärtung (Elektronen-oder UV-Strahlenhärtung) vernetzt werden können. Solche Polyesteracrylate, die, wie beispielsweise in der DE-OS 2 261 612 oder De-OS 2 838 691 beschrieben, als Umsetzungsprodukte von Acrylsäure mit Diolen, Polyolen und Dicarbonsäuren erhalten werden, weisen im allgemeinen eine hochviskose, teils harzartige Konsistenz auf. Um diese Massen in den verarbeitungsfähigen Zustand zu überführen, ist die Mitverwendung großer Mengen von Vinylmonomeren, sogenannter Reaktivverdünner, unerläßlich.

Die Verwendung von Reaktivverdünnern führt jedoch in den meisten Fällen dazu, daß in den applizierbaren Formulierungen das Bindemittel sehr stark verdünnt wird und somit die mittels der Polyesteracrylate bewirkten Lackeigenschaften durch die in den Film mit einpolymerisierten Reaktivverdünner nivelliert werden. Naturgemäß wird dieser Effekt besonders deutlich dann beobachtet, wenn das Bindemittel eine hochviskose Konsistenz aufweist. Ferner weisen viele Vinylmonomere einen intensiven Eigengeruch auf und sind hautreizend.

Dem Fachmann ist es geläufig, (vgl. z.B. DE-OS 3 704 098), daß niederviskose Polyesteracrylate erhalten werden, wenn niedermolekulare Polyester oder Polyether mit Acrylsäure verestert werden.

Den bislang bekannt gewordenen Überzugsmassen auf Basis dieser Ausgangsmaterialien haftet jedoch insbesondere der Nachteil einer vergleichsweise langsamen Aushärtung unter Bestrahlung an.

Es war daher die der Erfindung zugrundeliegende Aufgabe, neue Polyesteracrylate bereitzustellen, die, da niedrigviskos, nur wenig Lösungsmittel zur Einstellung von Verarbeitungsviskosität benötigen und die nach der Strahlenhärtung die gewohnt guten Eigenschaften der üblichen Polyesteracrylate aufweisen.

Überraschenderweise wurde gefunden, daß diese Aufgabe mit den nachstehend näher beschriebenen, erfindungsgemäßen Polyesteracrylaten gelöst werden kann.

Gegenstand der Erfindung sind Acryloylgruppen-aufweisende Polyester einer Viskosität bei 23°C von 2.000 bis 20.000 mPa.s und einer Säurezahl von 0 bis 25, dadurch gekennzeichnet, daß sie das Veresterungsprodukt von

A) 0,7x bis 0,2x Mol Terephthalsäure

B) 0,3x bis 0,8x Mol Adipinsäure

C) 0 bis 0,3x Mol einer Säurekomponente, bestehend aus mindestens einer anderen aromatischen oder gesättigten (cyclo)aliphatischen Dicarbonsäure des Molekulargewichts 100 bis 202 und/oder mindestens einem Anhydrid einer derartigen Dicarbonsäure,

D) 0,4x bis 1,5x Mol einer Diolkomponente, bestehend aus mindestens einem zweiwertigen, gesättigten Alkohol mit 2 bis 6 Kohlenstoffatomen,

E) 0,4x bis 1,1x Mol einer Triolkomponente, bestehend aus mindestens einem dreiwertigen, gesättigten Ethergruppen aufweisenden Alkohol, der durch Anlagerung von 3 bis 6 Mol Ethylenoxid an 1 Mol eines dreiwertigen, gesättigten, Ethergruppenfreien Alkohols des Molekulargewichts 92 bis 134 erhalten worden ist, und

F) 1,0x bis 2,0x Mol Acrylsäure

darstellen, wobei die Summe aus A), B) und C) 1,0x die Summe aus D) und E) mindestens 1,5x beträgt, x für eine beliebige positive Zahl steht, und die Summe der Hydroxyläquivalente der Komponente D) und E) mindestens der Summe der Carboxyläquivalente der Komponente A), B), C) und F) entspricht.

Gegenstand der Erfindung ist auch ein Verfahren zur Herstellung dieser Acryloylgruppen aufweisenden Polyester, welches dadurch gekennzeichnet ist, daß man

A) 0,7x bis 0,2x Mol Terephthalsäure,

B) 0,3x bis 0,8x Mol Adipinsäure,

C) 0 bis 0,3x Mol einer Säurekomponente, bestehend aus mindestens einer anderen aromatischen oder gesättigten (cyclo)aliphatischen Dicarbonsäure des Molekulargewichts 100 bis 202 und/oder mindestens einem Anhydrid einer derartigen Dicarbonsäure,

D) 0,4x bis 1,5x Mol einer Diolkomponente, bestehend aus mindestens einem zweiwertigen, gesättigten Alkohol mit 2 bis 6 Kohlenstoffatomen,

E) 0,4x bis 1,1x Mol einer Triolkomponente, bestehend aus mindestens einem dreiwertigen, gesättigten, Ethergruppen aufweisenden Alkohol, der durch Anlagerung von 3 bis 6 Mol Ethylenoxid an 1 Mol eines dreiwertigen, gesättigten, Ethergruppen-freien Alkohols des Molekulargewichts 92 bis 134 erhalten worden ist,

unter den Bedingungen einer Schmelzkondensation bei 180 bis 250°C miteinander umsetzt, bis eine

2

Säurezahl von kleiner als 3 erreicht ist, und diese Hydroxylgruppen aufweisenden Polyester unter den Bedingungen einer Azeotropveresterung mit

    F) 1,0x bis 2,0x Mol Acrylsäure

umsetzt, wobei die Summe aus A), B) und C) 1,0x, die Summe aus D) und E) mindestens 1,5x beträgt, x für eine beliebige positive Zahl steht, und die Summe der Hydroxyläquivalente der Komponenten D) und E) mindestens der Summe der Carboxyläquivalente der Komponenten A), B), C) und F) entspricht.

Gegenstand der Erfindung ist schließlich auch die Verwendung der neuen Polyesteracrylate als strahlenhärtbare Lackbindemittel.

Bei der Komponente A) handelt es sich um Terephthalsäure. Bei der Komponente B) handelt es sich um Adipinsäure. Bei der Komponente C) handelt es sich beispielsweise um Säuren wie Phthalsäure, Hexahydrophthalsäure, Isophthalsäure, Phthalsäureanhydrid, Hexahydrophthalsäureanhydrid oder um Gemische derartiger Säuren bzw. Säureanhydride.

Bei der Komponente D) handelt es sich um eine Diolkomponente, bestehend aus mindestens einem zweiwertigen, gesättigten Alkohol mit 2 bis 6 Kohlenstoffatomen. Typische Beispiele sind Ethylenglykol, Propandiol-1,2, Propandiol-1,3, Butandiol-1,2, Butandiol-1,3, Butandiol-1,4, Pentandiol-1,3, Hexandiol-1,6 und Diethylenglykol. Bevorzugt sind Ethylenglykol und Propandiol-1,2.

Bei der Komponente E) handelt es sich um eine Triolkomponente, bestehend aus mindestens einem dreiwertigen, gesättigten Ethergruppen aufweisenden Alkohol, wie es durch Anlagerung von 3 bis 6 Mol Ethylenoxid an einen gesättigten dreiwertigen, Ethergruppen-freien Alkohol des Molekulargewichttsbereichs 92 bis 134 in an sich bekannter Weise erhalten werden kann. Vorzugsweise handelt es sich bei den Ethergruppen aufweisenden Triolen um, die Ethoxylierungsprodukte von Glycerin, Trimethylolethan oder Trimethylolpropan, die unter Einhaltung eines Ethoxylierungsgrades von 3 bis 6 (Ethoxylierungsgrad = Anzahl der Mole Ethylenoxid, die an 1 Mol Triol im Durchschnitt angelagert werden) hergestellt worden sind. Besonders bevorzugt wird als Komponente E) das Anlagerungsprodukt von 3 bis 4 Mol Ethylenoxid an 1 Mol Trimethylolpropan (= 1,1,1,-Tris-(hydroxymethyl)-propan) verwendet.

Bei der Komponente F) handelt es sich um Acrylsäure.

Die genannten Ausgangskomponenten werden in den obenangegebenen Mengen eingesetzt, wobei der Faktor "x" lediglich zum Ausdruck bringen soll, daß die genannten Molmengen (x = 1) bzw. beliebige Bruchteile bzw. Vielfache (x = positive, ganze oder gebrochene, von 1 verschiedene Zahl) zur Anwendung gelangen können.

Das erfindungsgemäße Verfahren stellt die bevorzugte Methode der Herstellung der erfindungsgemäßen Polyesteracrylate dar. Es besteht in einer Zweistufen-Reaktion, wobei in der ersten Reaktionsstufe die Ausgangskomponente A) - E) unter den Bedingungen einer Schmelzkondensation miteinander umgesetzt werden, bis eine Säurezahl (mg KOH/g Substanz) von kleiner als 3 erreicht ist, wonach sich in der zweiten Reaktionsstufe die Veresterung des zu erhaltenen Hydroxylgruppen aufweisenden Polyesters mit der Acrylsäure anschließt. Zur Durchführung dieser zweiten Reaktionsstufe werden die Reaktionspartner d.h. der Hydroxylgruppen aufweisenden Polyester aus der ersten Reaktionsstufe und die Acrylsäure in Gegenwart eines Veresterungskatalysators, beispielsweise von Schwefelsäure oder p-Toluolsulfonsäure in einer Menge von ca. 0,5 bis 3,0 Gew.-%, bezogen auf das Gewicht der Reaktionspartner, und in Gegenwart eines oder mehrerer Inhibitoren gegen vorzeitige Polymerisation, wie beispielsweise Hydrochinonmonomethylether, p-Methoxyphenol, 2,4-Di-t.-butylhydrochinon unter Luftsauerstoff in einem inerten Lösungsmittel wie beispielsweise Cyclohexan, Isooktan oder Toluol auf Siedetemperatur solange erhitzt, bis sich kein Reaktionswasser mehr abscheidet. Das Reaktionswasser wird gleichzeitig durch azeotrope Destillation entfernt. Im allgemeinen erfolgt die Umsetzung in der zweiten Reaktionsstufe innerhalb des Temperaturbereiches von 70-130 ° C, vorzugsweise 100-120 ° C. Im Anschluß an die Umsetzung wird das mitverwendete Lösungsmittel destillativ, vorzugsweise im Vakuum abgezogen. Gegebenenfalls kann eine Nachbehandlung des Endprodukts zur Erzielung einer geringeren Säurezahl durchgeführt werden, wie z.B. die Reaktion mit Carbodiimiden nach DE-OS 3 514 402 bzw. mit Epoxiden nach DE-OS 3 316 593.

Bei der erfindungsgemäßen Verwendung der erfindungsgemäßen Polyesteracrylate als Lackmittel können diese ohne Zusatz von copolymerisierbaren Monomeren (reaktive Verdünner) und ohne Zusatz von Lösungsmitteln zur Anwendung gelangen, da es sich bei den erfindungsgemäßen Produkten um vergleichsweise niedrigviskose Substanzen handelt.

In den Fällen, in denen eine Abmischung mit copolymerisierbaren Monomeren gewünscht ist, ist dies selbstverständlich möglich. Zur Abmischung geeignete copolymerisierbare Monomere sind z.B. $C_1$-$C_4$-Alkylester der Acryl-oder Methacrylsäure und/oder Styrol, wobei diese Reaktivverdünner in Mengen von bis zu 70 Gew.-%, bezogen auf das Gesamtgewicht der erfindungsgemäßen Polyester und der Reaktivverdünner, zum Einsatz gelangen können.

Gewünschtenfalls ist es ebenfalls möglich, die erfindungsgemäßen Umsetzungsprodukte mit inerten Lösungsmitteln wie Butylacetat, Cyclohexan, Aceton und/oder Toluol abzumischen.

Die Zusätze können etwa 0 bis 70 Gew.-%, bezogen auf Mischung aus erfindungsgemäßen Polyesteracrylaten und zusätzliche Lösungsmitteln, betragen.

Natürlich ist es auch möglich, Mischungen aus zusätzlichen Monomeren und Lösungsmitteln innerhalb der angegebenen Mengenverhältnisse einzusetzen.

Die unter erfindungsgemäßer Verwendung der erfindungsgemäßen Produkte hergestellten Lacke können die an sich bekannten Hilfs- und Zusatzmittel der Lacktechnologie wie z.B. Füllstoffe, Pigmente, Farbstoffe, Thixotropiermittel, Glättmittel, Mattierungsmittel oder Verlaufmittel in üblichen Mengen enthalten.

Die Lacke eignen sich hervorragend zur Verarbeitung auf den herkömmlichen mit Gießmaschinen ausgerüsteten Lackierstraßen. Weiter sind sie durch Walzen und Spritzen applizierbar. Bevorzugte Substrate sind Holz und Holzwerkstoffe, Papier, Kork und Kunststoffe.

Die Härtung erfolgt mit ionisierender, z.B. energiereicher Elektronenstrahlung bzw. in Gegenwart von Photoinitiatoren mit UV-Strahlung.

Als Photoinitiator, die den Lacken im Bedarfsfall spätestens vor ihrer Anwendung einverleibt werden, sind die für die Strahlenhärtung hinlänglich bekannten Verbindungen geeignet, wie beispielsweise Benzophenon sowie ganz allgemein aromatische Ketoverbindungen.

Bevorzugte Photoinitiatoren sind Benzoin und seine Derivate, wie beispielsweise in den DE-OS 1 769 168, 1 769 853, 1 769 854, 1 807 297, 1 807 301, 1 919 678 und der DE-AS 1 694 143 beschrieben, ferner Benzilketale wie z.B. Benzildimethylketale und Hydroxyalkylphenone wie z.B. 2-Hydroxy-2-methyl-1-phenyl-propan-1-on.

In den nachfolgenden Beispielen und Vergleichsbeispielen beziehen sich alle Prozentangaben auf das Gewichte.

Beispiele

In den nachfolgend tabellarisch zusammengefaßten, erfindungsgemäßen Herstellungsbeispielen 1 bis 3 sowie Vergleichsbeispielen 4 bis 8, werden jeweils zunächst in der ersten Stufe die Ausgangskomponenten A), B), C) D) und E) unter Stickstoff auf 200 bis 250°C in Abwesenheit von sonstigen Zusatzstoffen erhitzt bis eine Säurezahl kleiner 3 erreicht ist.

Die Durchführung der zweiten Stufe des erfindungsgemäßen Verfahrens erfolgte jeweils in 70 %iger Lösung in Toluol in Gegenwart von 1,5 % p-Toluolsulfonsäure als Katalysator und von 0,1 % p-Methoxyphenol sowie 0,1 % 3,4-Di-t.-butylhydrochinon als Inhibitoren, stets bezogen auf die Summe der Komponenten A) bis F). Nach Zugabe der Komponente F) sowie Katalysator und Inhibitoren und Toluol wird das Gemisch unter Durchleiten von Luft solange auf 100-120°C unter fortlaufender Entfernung des entstehenden Wassers durch azeotrope Destillation erhitzt, bis sich kein Wasser mehr abscheidet. Nach Abkühlen wird bei 50-90°C das Lösungsmittel unter Vakuum abdestilliert.

Um den Einfluß der richtigen Auswahl der Art und Menge der eingesetzten Ausgangsmaterialien zu zeigen, wurde beispielsweise Beispiel 2 mit folgenden Änderungen wiederholt:

Vergleichsbeispiel 4 enthält Phthalsäure anstelle von Terephthalsäure, Vergleichsbeispiel 5 enthält Phthalsäure anstelle von Adipinsäure, Vergleichsbeispiel 6 enthält propoxyliertes anstelle von ethoxyliertem Trimethylolpropan, Vergleichsbeispiel 7 enthält eine zu niedrige, Vergleichsbeispiel 8 eine zu hohe Menge an Terephthalsäure.

Die Ausgangsmaterialien werden in nachstehender Tabelle 1, die Eigenschaften der entstehenden Polyester in Tabelle 2 zusammengefaßt.

## Tabelle 1

| Ausgangsmaterialien (Mengenangaben in Mol) | erfindungsgemäße Beispiele | | | Vergleichsbeispiele | | | | |
|---|---|---|---|---|---|---|---|---|
| | 1 | 2 | 3 | 4 | 5 | 6 | 7 | 8 |
| A) Terephthalsäure | 0,2 | 0,4 | 0,6 | | 0,4 | 0,4 | 0,1 | 0,8 |
| B) Adipinsäure | 0,8 | 0,6 | 0,4 | 0,6 | | 0,6 | 0,9 | 0,2 |
| C) Phthalsäureanhydrid | | | | 0,4 | 0,6 | | | |
| D) Ethylenglykol | 1,2 | 1,2 | 1,2 | 1,2 | 1,2 | 1,2 | 1,2 | 1,2 |
| E) ethoxyliertes Tri-methylolpropan (Ethox.grad: 4) | 0,5 | 0,5 | 0,5 | 0,5 | 0,5 | | 0,5 | 0,5 |
| propoxyliertes Tri-methylolpropan (Propoxylierungs-grad: 3) | | | | | | 0,5 | | |
| F) Acrylsäure | 1,4 | 1,4 | 1,4 | 1,4 | 1,4 | 1,4 | 1,4 | 1,4 |

EP 0 407 826 B1

Verwendungsbeispiele 1 bis 3 (erfindungsgemäß) und 4 bis 8 (Vergleichsbeispiele)

Vergleichsbeispiel 5 und 8 besitzen zu hohe Viskositäten und werden deshalb nicht eingesetzt.

Die Produkte der restlichen Beipiele werden mit 5 % 1-Phenyl-2-hydroxy-2-methyl-propan-1-on versetzt. Nach Auftragen der Lackfilme auf furnierte Spanplatten (12 $\mu$m Auftragsstärke) werden die Platten unter einem Hanoviastrahler (80 W/cm, 10 cm Abstand) durchbewegt.

Der in Tabelle 2 für die Reaktivität angegebene Wert gibt diejenige Bandgeschwindigkeit an, bei der ein kratzfester Überzug erzielt wurde.

Tabelle 2

| Eigenschaften des Polyesters | erfindungsgemäße Beispiele | | | Vergleichsbeispiele | | | | |
|---|---|---|---|---|---|---|---|---|
| | 1 | 2 | 3 | 4 | 5 | 6 | 7 | 8 |
| Säurezahl (mg KOH/g Substanz) | 22 | 10 | 15 | 14 | 20 | 15 | 14 | 15 |
| Viskosität (mPa.s bei 23⁰C) | 3700 | 6000 | 9500 | 3800 | 45000 | 5200 | 2100 | 28100 |
| Reaktivität (m/min) | 60 | 60 | 60 | 30 | - | 20 | 40 | - |

**Patentansprüche**

1. Acryloylgruppen aufweisende Polyester einer Viskosität bei 23 °C von 2.000 bis 20.000 mPa.s und einer Säurezahl von 0 bis 25, dadurch gekennzeichnet, daß sie das Veresterungsprodukt von

A) 0,7x bis 0,2x Mol Terephthalsäure

B) 0,3x bis 0,8x Mol Adipinsäure

C) 0 bis 0,3x Mol einer Säurekomponente, bestehend aus mindestens einer anderen aromatischen oder gesättigten (cyclo)aliphatischen Dicarbonsäure des Molekulargewichts 100 bis 202 und/oder mindestens einem Anhydrid einer derartigen Dicarbonsäure,

D) 0,4x bis 1,5x Mol einer Diolkomponente, bestehend aus mindestens einem zweiwertigen, gesättigten Alkohol mit 2 bis 6 Kohlenstoffatomen,

E) 0,4x bis 1,1x Mol einer Triolkomponente, bestehend aus mindestens einem dreiwertigen, gesättigten, Ethergruppen aufweisenden Alkohol, der durch Anlagerung von 3 bis 6 Mol Ethylenoxid an 1 Mol eines dreiwertigen, gesättigten, Ethergruppen-freien Alkohols des Molekulargewichts 92 bis 134 erhalten worden ist, und

F) 1,0x bis 2,0x Mol Acrylsäure

darstellen, wobei die Summe aus A), B) und C) 1,0x die Summe aus D) und E) mindestens 1,5x beträgt, x für eine beliebige positive Zahl steht, und die Summe der Hydroxyläquivalente der Komponente D) und E) mindestens der Summe der Carboxyläquivalente der Komponente A), B), C) und F) entspricht.

2. Verfahren zur Herstellung von Acryloylgruppen aufweisenden Polyester gemäß Anspruch 1, dadurch gekennzeichnet, daß man

A) 0,7x bis 0,2x Mol Terephthalsäure,

B) 0,3x bis 0,8x Mol Adipinsäure,

C) 0 bis 0,3x Mol einer Säurekomponente, bestehend aus mindestens einer anderen aromatischen oder gesättigten (cyclo)aliphatischen Dicarbonsäure des Molekulargewichts 100 bis 202 und/oder mindestens einem Anhydrid einer derartigen Dicarbonsäure,

D) 0,4x bis 1,5x Mol einer Diolkomponente, bestehend aus mindestens einem zweiwertigen, gesättigten Alkohol mit 2 bis 6 Kohlenstoffatomen,

E) 0,4x bis 1,1x Mol einer Triolkomponente, bestehend aus mindestens einem dreiwertigen, gesättigten, Ethergruppen aufweisenden Alkohol, der durch Anlagerung von 3 bis 6 Mol Ethylenoxid an 1 Mol eines dreiwertigen, gesättigten, Ethergruppen-freien Alkohols des Molekulargewichts 92 bis 134 erhalten worden ist,

unter den Bedingungen einer Schmelzkondensation bei 180 bis 250°C miteinander umsetzt, bis eine Säurezahl von kleiner als 3 erreicht ist, und diese Hydroxylgruppen aufweisenden Polyester unter den Bedingungen einer Azeotropveresterung mit

F) 1,0x bis 2,0x Mol Acrylsäure

umsetzt, wobei die Summe aus A), B) und C) 1,0x, die Summe aus D) und E) mindestens 1,5x beträgt, x für eine beliebige positive Zahl steht, und die Summe der Hydroxyläquivalente der Komponenten D) und E) mindestens der Summe der Carboxyläquivalente der Komponenten A), B), C) und F) entspricht.

3. Verwendung der Polyester gemäß Anspruch 1 als strahlenhärtbares Lackbindemittel.

**Claims**

1. Polyesters containing acryloyl groups which have a viscosity at 23°C in the range from 2,000 to 20,000 mPa.s and an acid value of 0 to 25, characterized in that they are the esterification product of

A) 0.7x to 0.2x mol terephthalic acid,

B) 0.3x to 0.8x mol adipic acid,

C) 0 to 0.3x mol of an acid component consisting of at least one other aromatic or saturated (cyclo)-aliphatic dicarboxylic acid having a molecular weight in the range from 100 to 202 or at least one anhydride of such a dicarboxylic acid,

D) 0.4x to 1.5x mol of a diol component consisting of at least one dihydric, saturated $C_{2-6}$ alcohol,

E) 0.4x to 1.1x mol of a triol component consisting of at least one trihydric, saturated alcohol containing ether groups which has been obtained by addition of 3 to 6 mol ethylene oxide onto 1 mol of a trihydric, saturated alcohol containing ether groups and having a molecular weight in the range from 92 to 134, and

F) 1.0x to 2.0x mol acrylic acid,

the sum of A), B) and C) being 1.0x, the sum of D) and E) being at least 1.5x, x being a positive number, and the sum of the hydroxyl equivalents of components D) and E) corresponding to at least the sum of the carboxyl equivalents of components A), B), C) and F).

2. A process for the production of these polyesters containing acryloyl groups, characterized in that
   A) 0.7x to 0.2x mol terephthalic acid,
   B) 0.3x to 0.8x mol adipic acid,
   C) 0 to 0.3x mol of an acid component consisting of at least one other aromatic or saturated (cyclo)-aliphatic dicarboxylic acid having a molecular weight in the range from 100 to 202 or at least one anhydride of such a dicarboxylic acid,
   D) 0.4x to 1.5x mol of a diol component consisting of at least one dihydric, saturated $C_{2-6}$ alcohol,
   E) 0.4x to 1.1x mol of a triol component consisting of at least one trihydric, saturated alcohol containing ether groups which has been obtained by addition of 3 to 6 mol ethylene oxide onto 1 mol of a trihydric, saturated alcohol containing ether groups and having a molecular weight in the range from 92 to 134,
   are reacted with one another at 180 to 250°C under melt condensation conditions until an acid value below 3 is reached and the resulting polyesters containing hydroxyl groups are reacted with
   F) 1.0x to 2.0x mol acrylic acid
   under azeotropic esterification conditions,
   the sum of A), B) and C) being 1.0x, the sum of D) and E) being at least 1.5x, x being a positive number, and the sum of the hydroxyl equivalents of components D) and E) corresponding to at least the sum of the carboxyl equivalents of components A), B), C) and F).

3. The use of the polyesters claimed in claim 1 as radiation-curing paint binders.


**Revendications**

1. Polyesters présentant des groupes acryloyle, ayant une viscosité à 23°C de 2.000 à 20.000 mPa.s et un indice d'acide de 0 à 25, caractérisés en ce qu'ils représentent le produit d'estérification de
   A) de 0,7x à 0,2x mole d'acide téréphtalique,
   B) de 0,3x à 0,8x mole d'acide adipique,
   C) de 0 à 0,3x mole d'un composant acide constitué par au moins un autre acide dicarboxylique cyclo(aliphatique) saturé ou aromatique du poids moléculaire de 100 à 202 et/ou au moins un anhydride d'un acide dicarboxylique de ce type,
   D) de 0,4x à 1,5x mole d'un composant de diol constitué par au moins un alcool saturé bivalent contenant de 2 à 6 atomes de carbone,
   E) de 0,4x à 1,1x mole d'un composant de triol constitué par au moins un alcool saturé trivalent présentant des groupes éther que l'on obtient par addition de 3 à 6 moles d'oxyde d'éthylène à 1 mole d'un alcool saturé trivalent exempt de groupes éther du poids moléculaire de 92 à 134, et
   F) de 1,0x à 2,0x moles d'acide acrylique
   dans lesquels la somme de A), a) et C) s'élève à 1,0x, la somme de D) et E) s'élève au moins à 1,5x, x représentant n'importe quel nombre positif, et la somme des équivalents hydroxyle du composant D) et E) correspondant au moins à la somme des équivalents carboxyle des composants A), B), C) et F).

2. Procédé pour la préparation de polyesters présentant des groupes acrylolyle selon la revendication 1, caractérisé en ce qu'on fait réagir mutuellement
   A) de 0,7x à 0,2x mode d'acide téréphtalique,
   B) de 0,3x à 0,8x mode d'acide adipique,
   C) de 0 à 0,3x mode d'un composant acide constitué par au moins un autre acide dicarboxylique cyclo(aliphatique) saturé ou aromatique du poids moléculaire de 100 à 202 et/ou au moins un anhydride d'un acide dicarboxylique de ce type,
   D) de 0,4x à 1,5x mode d'un composant de diol constitué par au moins un alcool saturé bivalent contenant de 2 à 6 atomes de carbone,
   E) de 0,4x à 1,1x mode d'un composant de triol constitué par au moins un alcool saturé trivalent présentant des groupes éther que l'on obtient par addition de 3 à 6 modes d'oxyde d'éthylène à 1 mole d'un alcool saturé trivalent exempt de groupes éther du poids moléculaire de 92 à 134,
   dans les conditions d'une condensation en fusion à une température de 180 à 250°C, jusqu'à ce que l'on obtienne un indice d'acide inférieur à 3, et on fait réagir ces polyesters présentant des groupes hydroxyde dans les conditions d'une estérification azéotrope avec
   F) de 1,0x à 2,0x modes d'acide acrylique
   dans desquels la somme de A), B) et C) s'élève à 1,0x, la somme de D) et E) s'élève au moins à 1,5x, x représentant n'importe quel nombre positif, et la somme des équivalents hydroxyle du composant D) et E) correspondant au moins à la somme des équivalents carboxyle des composants A), B), C) et F).

3. Utilisation des polyesters selon la revendication 1, comme liants pour des laques, des vernis ou des peintures, durcissables par rayonnement.